(19) Europäisches Patentamt
European Patent Office
Office européen des brevets

(11) Publication number: **0 511 670 A2**

(12) # EUROPEAN PATENT APPLICATION

(21) Application number: **92107398.7**

(22) Date of filing: **30.04.92**

(51) Int. Cl.[5]: **C08L 63/00**, C08G 77/38, C08L 83/04

(30) Priority: **30.04.91 JP 126667/91**

(43) Date of publication of application: **04.11.92 Bulletin 92/45**

(84) Designated Contracting States: **DE FR GB**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Mikami, Ryuzo**
**6,1-chome, Yushudai Nishi**
**Ichihara-shi, Chiba Prefecture(JP)**
Inventor: **Okawa, Tadashi**
**6,1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **Thermosetting epoxy resin composition.**

(57) A thermosetting epoxy resin composition is disclosed which consists essentially of
(A) a carboxylic acid-modified organopolysiloxane having at least three carboxyl groups in each molecule which is prepared by reacting
(a) an organopolysiloxane having at least three carbinol groups in each molecule, and
(b) a polyvalent carboxylic acid anhydride; and
(B) an epoxy resin having at least two epoxy groups in each molecule.

EP 0 511 670 A2

The present invention relates to a thermosetting epoxy resin composition.

Amine compounds and polycarboxylic acids are typically used as epoxy resin curing agents. Among these, aromatic polycarboxylic acids provide chemically stable thermosetting epoxy resins with an excellent heat resistance. However, due to their high melting points and low solubility in organic solvents, aromatic polycarboxylic acids are poorly dispersible in epoxy resins. On the other hand, compositions are also known which comprise the admixture of organofunctional organopolysiloxane with epoxy resin. For example, Japanese Patent Publication Number 2-59185 [59,185/90] discloses an epoxy resin composition which contains the reaction product from carboxylic acid-modified organopolysiloxane and epoxy resin. This particular carboxyl-modified organopolysiloxane is dimethylpolysiloxane carrying the carboxyl group only at the two terminals, and it is poorly compatible with epoxy resin due to its low carboxyl content. It must therefore be admixed after a preliminary reaction with epoxy resin.

As a consequence of research directed at solving the aforementioned problems, the present inventors have discovered that a particular carboxyl-modified organopolysiloxane is in fact highly compatible with epoxy resins, and, moreover, that epoxy resin compositions containing same have excellent curing characteristics. The present invention was developed based on these findings.

The present invention takes as its object the introduction of a thermosetting epoxy resin composition which exhibits excellent curing characteristics and relates to a thermosetting epoxy resin composition consisting essentially of (A) a carboxylic acid-modified organopolysiloxane having at least three carboxyl groups in each molecule which is prepared by reacting (a) an organopolysiloxane having at least three carbinol groups in each molecule, and (b) a polyvalent carboxylic acid anhydride; and (B) an epoxy resin having at least 2 epoxy groups in each molecule.

The carboxyl-modified organopolysiloxane comprising the component (A) employed by the present invention is prepared by the reaction of the aforementioned components (a) and (b) wherein said component (a) is an organopolysiloxane having at least 3 carbinol groups in each molecule. Such an organopolysiloxane can itself be prepared by addition-reacting unsaturated alcohol carrying at least one aliphatically unsaturated hydrocarbon group and carbinol group in each molecule with an organopolysiloxane carrying at least one silicon-bonded hydrogen in each molecule in the presence of a platinum-type catalyst. This preparative method is exemplified by the method described in Japanese Patent Application Laid Open [Kokai or Unexamined] Number 60-206834 [206,834/85]. According to this method, trimethylsilyl-blocked allyl alcohol is addition-reacted with SiH-containing organopolysiloxane followed by a desilylation reaction to afford the carbinol-containing organopolysiloxane. This may be expressed by the following reaction equations.

(1) addition reaction (equation 1)

$$CH_2=CHCH_2OSi(CH_3)_3 + H\text{-}Si\equiv \longrightarrow (CH_3)_3SiO(CH_2)_3Si\equiv$$

(2) desilylation reaction (equation 2)

$$(CH_3)_3SiO(CH_2)_3Si\equiv + H_2O \longrightarrow HO(CH_2)_3Si\equiv$$

The following are provided as examples of applicable unsaturated alcohols carrying at least one aliphatically unsaturated hydrocarbon group and carbinol group in each molecule: allyl alcohol, methallyl alcohol, ethylene glycol monoallyl ether, glycerol monoallyl ether, glycerol diallyl ether, trimethylolpropane monoallyl ether, trimethylolpropane diallyl ether, trimethylolethane monoallyl ether, trimethylolethane diallyl ether, pentaerythritol monoallyl ether, and pentaerythritol diallyl ether. Silylating agents useful for blocking the carbinol group with the triorganosilyl group are exemplified by trimethylchlorosilane and hexamethyldisilazane. Applicable organopolysiloxanes having at least one silicon-bonded hydrogen in each molecule are exemplified as follows.

(compound 1)

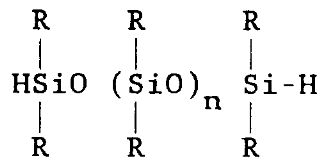

(compound 2)

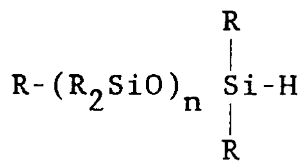

(compound 3)

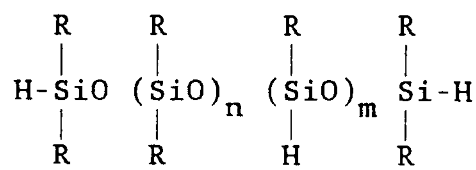

(compound 4)

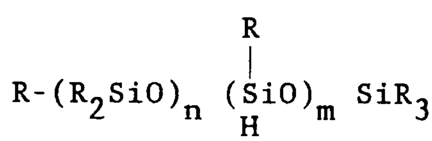

(compound 5)

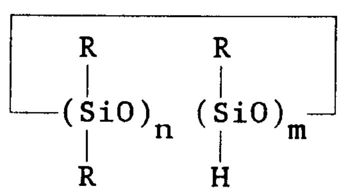

(compound 6)

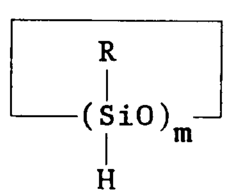

In the preceding formulas, R is an unsubstituted monovalent hydrocarbon group as exemplified by alkyl groups such as methyl, ethyl, propyl, and butyl; aryl groups such as phenyl and tolyl; and cycloalkyl groups such as cyclohexyl; or a substituted monovalent hydrocarbon group as exemplified by chloromethyl,

trifluoropropyl, and cyanomethyl. Methyl is preferred among the preceding. In the formulas, m and n are positive integers. While the molecular weight of this organopolysiloxane is not specifically restricted, molecular weights of 144 through 10,000 are preferred.

Component (a) is prepared by addition-reacting the aforementioned unsaturated alcohol having at least one aliphatically unsaturated hydrocarbon group and carbinol group in each molecule with the aforementioned polyorganosiloxane having at least one SiH in each molecule in the presence of a platinum-type catalyst in order thereby to introduce the carbinol group. The platinum-type catalyst used here is exemplified by chloroplatinic acid, platinum/olefin complexes, and chloroplatinic acid/vinylsiloxane complexes. This addition reaction should be run using a modest excess for the number of moles of the former unsaturated alcohol over the number of moles of silicon-bonded hydrogen in the latter polyorganosiloxane. After the addition reaction, the excess unsaturated alcohol is easily removed by distillation or the like. This addition reaction may be run at a temperature from room temperature to 150 ° C; however, it is preferably run at a temperature in the range of 60 to 150 ° C in order to shorten the reaction time. Moreover, this addition reaction may be run in an organic solvent, and solvents preferred for use here are aromatic hydrocarbons such as benzene, toluene, and xylene and ethers such as diethyl ether and tetrahydrofuran.

The desilylation reaction is unnecessary in the case of the direct addition of unsaturated alcohol not blocked by triorganosilyl. However, in the case of the addition of triorganosilyl-blocked unsaturated alcohol, the addition reaction is followed by a desilylation (using acid or alkali) to yield the carbinol-containing organopolysiloxane comprising the component (a) used by the present invention.

The polycarboxylic anhydride (component (b)) employed by the present invention is exemplified by succinic anhydride, citraconic anhydride, itaconic anhydride, dodecenylsuccinic anhydride, maleic anhydride, hexahydrophthalic anhydride, methyltetrahydrophthalic anhydride, phthalic anhydride, trimellitic anhydride, pyromellitic anhydride, methylnadic anhydride, and 3,3',4,4'-benzophenonetetracarboxylic anhydride. The use of aromatic polycarboxylic anhydrides is preferred in order to impart compatibility with epoxy resins. It is crucial here that at least three carboxyl groups be introduced into each molecule by this reaction between polycarboxylic anhydride and carbinol-containing organopolysiloxane because organopolysiloxane having two or fewer carboxyl groups will not perform satisfactorily as a curing agent for commercial epoxy resins.

The carboxyl-modified organopolysiloxane comprising component (A) is prepared by reacting the aforementioned carbinol-containing organopolysiloxane with polycarboxylic anhydride in order thereby to introduce the carboxyl groups into the organopolysiloxane.
This reaction equation proceeds as follows.
(equation 3)

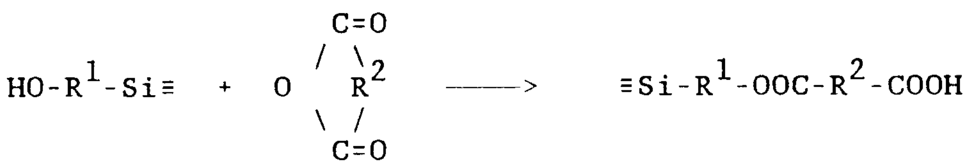

wherein $R^1$ and $R^2$ in the preceding equation are divalent hydrocarbon groups. In order to inhibit secondary reactions, this reaction is preferably run using one equivalent of carboxylic anhydride group per one equivalent of carbinol group. This reaction for introducing the carboxyl groups into organopolysiloxane by partial esterification of carboxylic anhydride can be run under relatively mild conditions, and it is preferably run at temperatures from 50 to 200 ° C or more. A tertiary amine may optionally be employed as reaction-accelerating catalyst, for example, triethanolamine, tetramethylbutanediamine, tetramethylpentanediamine, triethylenediamine, dimethylaniline, and dimethylbenzylamine. This reaction is typically run in the absence of solvent, but a solvent may be used. This solvent is preferably tetrahydrofuran or the like due to the corresponding good dissolution of the polycarboxylic anhydride and carbinol-containing organopolysiloxane.

Because the resulting carboxyl-containing organopolysiloxane is highly compatible with various types of epoxy resins and contains at least three carboxyl groups in each molecule, reaction in a preliminary step, etc., is rendered unnecessary, and a thermosetting epoxy resin composition may be prepared simply by mixing with the epoxy resin comprising component (B).

The epoxy resin comprising the component (B) used by the present invention should contain at least two epoxy groups in each molecule. Its molecular structure and molecular weight are not specifically restricted, and it may be any of the various epoxy resins known from the art. Examples in this regard are

the bisphenol-type epoxy resins synthesized from epichlorohydrin and bisphenol, epoxy resins synthesized from various types of novolac resins, alicyclic epoxy resins, and halogenated epoxy resins containing chlorine or bromine.

The ratio between equivalents of carboxyl groups in the carboxyl-modified organopolysiloxane comprising component (A) and equivalents of epoxy groups in the epoxy resin comprising component (B) in the composition according to the present invention need merely fall within a range which can provide a cured material. However, the preferred range is 0.4 to 4.0 equivalents of carboxyl groups in component (A) per equivalent of epoxy groups in component (B), and a more preferred range is 0.5 to 3.0 equivalents of carboxyl groups in component (A) per equivalent of epoxy groups in component (B).

The composition according to the present invention may contain other components in accordance with the intended application and purpose insofar as the object according to the present invention is not adversely affected. Such other components are exemplified by reinforcing inorganic fillers, extender inorganic fillers, mold-release agents such as fatty acids and waxes, colorants, adhesion promoters such as epoxysilanes, and flame retardants such as antimony compounds.

The thermosetting epoxy resin composition according to the present invention as described hereinbefore cures rapidly, exhibits an excellent post-cure adhesion to various types of substrates, and affords a transparent cured product. These properties make it is useful as a coating agent, potting agent, and molding material.

The present invention is explained in greater detail below using illustrative examples. All proportions are on a weight basis unless indicated to the contrary. These examples do not limit the scope of the present invention.

Reference Example 1

Three carbinol-containing dimethylpolysiloxanes were respectively synthesized by the addition reaction of silylated allyl alcohol with the three polyorganosiloxanes A, B, and C having different MeHSiO unit mole percentages and degrees of polymerization (see Table 1) at the proportions reported in Table 2. Thus, 105 g of silylated allyl alcohol ($CH_2=CHCH_2O\text{-}SiMe_3$) was introduced into a 1 liter four-neck flask equipped with addition funnel, reflux condenser, stirrer, and thermometer. The temperature in the flask was raised to 80 °C, and 0.005 g of platinum/vinysiloxane complex (platinum concentration = 4.4 wt%, prepared from chloroplatinic acid and 1,3-divinyltetramethyldisiloxane) was added. The SiH-containing polyorganosiloxane with the formula in Table 1 was then dripped in from the addition funnel over a period of approximately one hour. After the completion of addition, the reaction was run for an additional one hour while holding the reaction temperature at 110 to 130 °C. Unreacted substances and low boilers were distilled out in vacuo when the presence of silicon-bonded hydrogen could no longer be detected in a sample of the reaction mixture. This was followed by cooling to room temperature and the introduction of a methanol/acetic acid mixture. The temperature was then gradually increased, and a desilylation reaction was run for approximately 1 hour while distilling out the low boilers. After desilylation the excess low boilers such as methanol and acetic acid were distilled out in vacuo to afford the target carbinol-containing dimethylpolysiloxane (1, 2, or 3). The carbinol content in each product was in excellent agreement with the calculated value, indicating the side reaction-free preparation of a very pure carbinol-containing dimethylpolysiloxane.

**Table 1. Average chemical structural formulas of the organopolysiloxanes**

$$(CH_3)_3SiO\,[\overset{H}{\underset{CH_3}{Si}}O]_x\,[\overset{CH_3}{\underset{CH_3}{Si}}O]_y\,Si(CH_3)_3$$

| No. | x | y | SiH | |
|---|---|---|---|---|
| | | | mole%[1)] | weight% |
| A | 5 | 3 | 50 | 0.73 |
| B | 5 | 27 | 14.7 | 0.20 |
| C | 2 | 30 | 5.9 | 0.08 |

1) mole% of hydrogen-bonded silicon atoms in the dimethylpolysiloxane

**Table 2. Carbinol-containing dimethylpolysiloxanes**

| | | number | | |
|---|---|---|---|---|
| | | 1 | 2 | 3 |
| polysiloxane A | | 100 | 0 | 0 |
| polysiloxane B | | 0 | 100 | 0 |
| polysiloxane C | | 0 | 0 | 100 |
| trimethylsilylated allyl alcohol | | 105 | 30 | 12 |
| platinum compound | | 0.02 | 0.02 | 0.02 |
| methanol | | 320 | 210 | 180 |
| acetic acid | | 1.5 | 0.9 | 0.8 |
| carbinol group content (%) | measured value | 8.7 | 3.1 | 1.3 |
| | calculated value | 8.7 | 3.1 | 1.3 |

Carbinol-containing dimethylpolysiloxane 1, 2, or 3 from Reference Example 1 and trimellitic anhydride were introduced in the proportions reported in Table 3 into a 500 mL four-neck flask equipped with stirrer, reflux

condenser, thermometer, and nitrogen inlet tube. The temperature was gradually raised to 160 - 180°C under a nitrogen blanket, and a reaction was run at this temperature for 20 - 30 minutes. The solid trimellitic anhydride became homogeneously dissolved during the reaction.

After the reaction, the reaction mixture was removed from the flask and cooled to afford carboxyl-modified dimethylpolysiloxane 4, 5, or 6. The measured acid values for carboxyl-modified dimethylpolysiloxanes 4, 5, and 6 were in excellent agreement with the values calculated from the reagent proportions.

**Table 3. Carboxyl-modified dimethylpolysiloxanes**

| | | number | | |
|---|---|---|---|---|
| | | 4 | 5 | 6 |
| polysiloxane 1 | | 100 | 0 | 0 |
| polysiloxane 2 | | 0 | 100 | 0 |
| polysiloxane 3 | | 0 | 0 | 100 |
| trimellitic anhydride | | 98.2 | 35 | 14.6 |
| acid value | measured value | 289.0 | 151.0 | 74.0 |
| | calculated value | 289.5 | 151.5 | 74.4 |

Reference Example 2

To Synthesize a carboxyl-modified dimethylpolysiloxane the following were introduced into a 500 mL four-neck flask equipped with stirrer, reflux condenser, thermometer, and nitrogen inlet tube and heated to 160°C: 100 parts of carbinol-containing dimethylpolysiloxane 1 from Reference Example 1 (1) and 75.7 parts of phthalic anhydride. A reaction was run for 30 minutes at this temperature to give carboxyl-modified dimethylpolysiloxane 7. The measured acid value for carboxyl-modified dimethylpolysiloxane 7 was 163, which was in excellent agreement with the calculated value of 163.4.

Reference Example 3

To synthesize a carbinol-containing dimethylpolysiloxane into a 1 L four-neck flask equipped with addition funnel, reflux condenser, stirrer, and thermometer was placed 171.6 parts of silylated allyl alcohol ($CH_2=CHCH_2O\text{-}SiMe_3$). The temperature in the flask was raised to 80°C, 0.02 parts platinum/vinylsiloxane complex (platinum concentration = 4.4 wt%, prepared from chloroplatinic acid and 1,3-divinyltetramethyldisiloxane) was introduced, and 72 parts of cyclic methylhydrogenpolysiloxane as follows

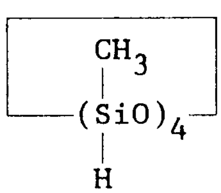

was then introduced from the addition funnel over approximately 30 minutes. After the completion of addition, the reaction was continued at the reflux temperature for an additional 2 hours. Low boilers such as

the silylated allyl alcohol were distilled out after the reaction.

A mixture of 350 parts of methanol and 2 parts of acetic acid was introduced into the same flask, and the temperature was then raised with stirring in order to run the desilylation reaction while distilling out low boilers. Low boilers such as methanol were subsequently distilled out in vacuo after the desilylation reaction. The carbinol content measured for the obtained carbinol-containing dimethylpolysiloxane was 14.3 wt%, which was in excellent agreement with the calculated value of 14.4 wt%.

To synthesis carboxyl-modified dimethylpolysiloxane the following were introduced into a 500 mL four-neck flask equipped with stirrer, reflux condenser, thermometer, and nitrogen inlet tube and heated to 160 °C: 100 parts of carbinol-containing dimethylpolysiloxane from step (1) above and 124.4 parts of phthalic anhydride. A reaction was run at this temperature for 30 minutes to give carboxyl-modified dimethylpolysiloxane 8. The acid value measured for carboxyl-modified dimethylpolysiloxane 8 was 210, which was in excellent agreement with the calculated value of 210.3.

Example 1

Separate tetrahydrofuran solutions (50 wt% solids in each case) were prepared from liquid bisphenol-type epoxy resin (Epikote 828 from Yuka Shell Kagaku Kabushiki Kaisha, Japan; epoxy equivalent weight = 182 - 194, abbreviated below as Epikote 828 epoxy resin) and from carboxyl-modified dimethylpolysiloxanes 4, 5, and 6 from Reference Example 1. These solutions were blended as reported in Table 4 to prepare thermosetting epoxy resin compositions. The hot-plate gelation time at 150 °C and the compatibility between the epoxy resin and carboxyl-modified dimethylpolysiloxane 4, 5, and 6 were examined for these compositions, and the results are reported in Table 4. The composition based on carboxyl-modified dimethylpolysiloxane 6 served as a comparison example (Comparison Example 1). A thermosetting epoxy resin composition was also prepared as above using trimellitic anhydride in place of the carboxyl-modified dimethylpolysiloxane. The properties of this composition were also measured as above, and these results are reported in Table 4 under Comparison Example 2.

The results demonstrate that carboxyl-modified polysiloxanes 4 and 5 were highly compatible with Epikote 828 epoxy resin while organopolysiloxane 6 (Comparison Example 1) was not compatible with Epikote 828 epoxy resin. According to the measurement results for the hot-plate gelation time, carboxyl-modified dimethylpolysiloxanes 4 and 5 gave faster curing rates than dimethylpolysiloxane 6 or trimellitic anhydride, thus confirming the former to be better epoxy resin curing agents from the standpoint of curing characteristics.

Table 4

| Curable epoxy resin compositions | | | | |
|---|---|---|---|---|
| | present invention | | comparison examples | |
| | 1 | 2 | 1 | 2 |
| polysiloxane 4 | 10 | 0 | 0 | 0 |
| polysiloxane 5 | 0 | 10 | 0 | 0 |
| polysiloxane 6 | 0 | 0 | 10 | 0 |
| trimellitic anhydride | 0 | 0 | 0 | 0.33 |
| epoxy resin (Epikote 828) | 9.8 | 5.1 | 2.5 | 2 |
| compatibility[5)] | excellent | excellent | poor | unknown |
| gelation time (seconds) | 19.5 | 36.9 | > 120 | 52 |

[5)] = solution compatibility. Dissolution to homogeneity did not occur in Comparison Example 2 because the evaluation was carried out immediately after mixing the Epikote 828 epoxy resin and trimellitic anhydride.

Example 2

Twenty percent tetrahydrofuran solutions were respectively prepared from Epikote 828 epoxy resin as used in Example 1, an epoxy resin which is solid at room temperature (Epikote 1001 from Yuka Shell

Kagaku Kabushiki Kaisha, Japan; melting point = 64 to 74°C, epoxy equivalent weight = 450 - 500, abbreviated below as Epikote 1001 epoxy resin), and carboxyl-modified dimethylpolysiloxane 4 from Reference Example 1. These were subsequently blended as shown in Table 5 to afford coating compositions. Each of these compositions was applied on a stainless steel plate, air-dried, and then cured at 170°C for one hour. The properties of the cured coatings were evaluated, and these results are reported in Table 5. The results demonstrate that carboxyl-modified dimethylpolysiloxane 4 had an excellent performance as an epoxy resin curing agent and provided a good film hardness and adherence to the substrate.

In addition, the above procedure was repeated using Comparison Example 1 (i.e., 10.0 parts of carboxyl-modified dimethylpolysiloxane 6 and 2.5 parts of Epikote 828 epoxy resin). The resulting film was hazy and too soft to measure pencil hardness (i.e., <5B hardness).

**Table 5. Coating compositions**

| | number | |
|---|---|---|
| | 3 | 4 |
| **compositions** | | |
| polysiloxane 4[5)] | 10.0 | 4.3 |
| epoxy resin (Epikote 828)[5)] | 9.8 | 0.0 |
| epoxy resin (Epikote 1001)[5)] | 0.0 | 10.0 |
| **film properties** | | |
| appearance | transparent | transparent |
| pencil hardness | 5H | 5H |
| adherence on stainless steel (cross-cut adhesion) | 100/100 | 100/100 |

5) 20 wt% tetrahydrofuran solution

Example 3

Eighteen parts of carboxyl-modified dimethylpolysiloxane 7 from Reference Example 2 was mixed at room temperature with 10 parts of Epikote 828 epoxy resin from Example 1. When the resulting mixture was cured by standing in an oven at 170°C for one hour, it did not develop air bubbles and a transparent cured material was obtained.

Example 4

Twenty percent tetrahydrofuran solutions were respectively prepared from Epikote 828 epoxy resin as used in Example 2, Epikote 1001 epoxy resin as used in Example 2, and carboxyl-modified dimethylpolysiloxane 8 from Reference Example 3. The solutions were blended as reported in Table 6 to produce the corresponding coating compositions. These compositions were applied on stainless steel plate, air-dried, and then cured at 170°C for 30 minutes. The properties of the cured coatings were evaluated, and these results are reported in Table 6. The results demonstrate that epoxy resin compositions prepared using carboxyl-modified dimethylpolysiloxane 8 as curing agent provided a good film hardness and adherence to the substrate.

Table 6. Coating compositions

| | number | |
|---|---|---|
| | 5 | 6 |
| compositions | | |
| polysiloxane 8[5)] | 4.2 | 2.1 |
| epoxy resin (Epikote 828)[5)] | 3.0 | 0.0 |
| epoxy resin (Epikote 1001)[5)] | 0.0 | 3.0 |
| film properties | | |
| appearance | transparent | transparent |
| pencil hardness | 2H | 4H |
| adherence on stainless steel (cross-cut adhesion) | 100/100 | 100/100 |

5) 20 wt% tetrahydrofuran solution

## Claims

1. A thermosetting epoxy resin composition consisting essentially of
   (A) a carboxylic acid-modified organopolysiloxane having at least three carboxyl groups in each molecule which is prepared by reacting
      (a) an organopolysiloxane having at least three carbinol groups in each molecule, and
      (b) a polyvalent carboxylic acid anhydride; and
   (B) an epoxy resin having at least two epoxy groups in each molecule.

2. The composition according to claim 1, wherein the ratio of equivalents of carboxyl groups in said carboxylic acid-modified organopolysiloxane (A) to the equivalents of epoxy groups in said epoxy resin (B) is 0.4 to 4.0.